# EUROPÄISCHE PATENTANMELDUNG

(11) **EP 4 246 483 A1**
(43) Veröffentlichungstag der Anmeldung: **20.09.2023**
(21) Anmeldenummer: 22163013.0
(22) Anmeldetag: 18.03.2022
(51) Int. Cl.: G08B 17/06, G08B 29/04

(54) **BRANDMELDER MIT UNBEHEIZTEN THERMISTOREN, INSBESONDERE NTCS, ZUR ERFASSUNG THERMISCHER FLUKTUATIONEN IM BEREICH DER EINTRITTSÖFFNUNGEN SOWIE KORRESPONDIERENDES VERFAHREN**

(71) Anmelder: Siemens Schweiz AG, 8047 Zürich (CH)
(72) Erfinder: Kuhn-Matysiak, Ulrich, 79219 Staufen (DE)
(74) Vertreter: Siemens Patent Attorneys

(57) **Zusammenfassung**

Ein Brandmelder (M) ist zur Erfassung einer Brandkenngrösse und zur Ausgabe eines Brandalarms (AL) eingerichtet. Er umfasst ein Gehäuse (G) mit Eintrittsöffnungen (OF) sowie im Bereich der Eintrittsöffnungen angeordnete Thermistoren (T1-T4), insbesondere NTCs. Der Brandmelder umfasst eine Steuereinheit (MC), die mit den Thermistoren zur Erfassung von Temperaturmesssignalen (S1-S4) verbunden ist. Die Steuereinheit ist in kennzeichnender Weise dazu eingerichtet, eine Warnmeldung (WM) für das Ausbleiben von bewegter Umgebungsluft um den zumindest einen Thermistor herum auszugeben, falls die Signalbandbreite von Signalfluktuationen zumindest eines der erfassten, vorzugsweise aller Temperaturmesssignale, eine Mindestzeit (MZ) lang einen Wert von 30 mK, insbesondere von 20 mK, vorzugsweise von 15 mK, unterschreitet. Ursachen für das Ausbleiben thermischer Fluktuationen können Verschmutzungen im Bereich der Eintrittsöffnungen oder ein Abdecken der Eintrittsöffnungen mit einer Schutzhaube oder mit einem Klebeband sein.

## Beschreibung

Die Erfindung betrifft einen Brandmelder, insbesondere einen (optischen) Rauchmelder zur Erfassung zumindest einer Brandkenngrösse in der Umgebung des Brandmelders sowie zur Ausgabe eines (Brand-)Alarms in einem detektierten Brandfall. Der Brandmelder weist ein Gehäuse mit zumindest einer Eintrittsöffnung, eine über diese mit der Umgebungsluft kommunizierende Sensorik zur Erfassung einer Strömung im Bereich der Sensorik sowie eine Steuereinheit auf. Die Steuereinheit ist mit der Sensorik zur Bewertung der Einsatzfähigkeit des Brandmelders verbunden. Weiterhin betrifft die Erfindung ein dazu korrespondierendes Verfahren.

Derartige Brandmelder sind z.B. aus der EP 1 857 989 A1, aus der DE 10 2009 000 393 A1, aus der EP 2 330 577 A1 oder aus der EP 2 189 956 A1 bekannt.

Aus der EP 2 624 229 A1 ist ein Brandmelder bekannt, der ein Gehäuse mit einer Messkammer zur Detektion von Rauchpartikeln umfasst. Der Brandmelder weist einen Strömungssensor zur Erfassung einer Strömung als Messgrösse zur Bewertung der Einsatzfähigkeit des Brandmelders und eine darauf basierende geeignete Auswerteeinrichtung auf. Bei einer dort bevorzugten konstruktiven Ausführungsform ist der Strömungssensor als Hitzedrahtströmungssensor ausgebildet, dessen Funktionsprinzip darauf beruht, dass sich aufgrund der Strömung ein Hitzedraht abkühlt. Der Grad der Abkühlung ist dabei eine Funktion der Strömungsgeschwindigkeit und der Lufttemperatur.

Davon ausgehend ist es eine Aufgabe der vorliegenden Erfindung, einen verbesserten Brandmelder anzugeben.

Es ist eine weitere Aufgabe der Erfindung, einen Brandmelder anzugeben, der eine stromsparendere Sensorik aufweist.

Schliesslich ist es eine Aufgabe der Erfindung, ein zum erfindungsgemässen Brandmelder korrespondierendes Verfahren anzugeben.

Die Aufgabe wird mit den Gegenständen der unabhängigen Ansprüche gelöst. Vorteilhafte Ausführungsformen der vorliegenden Erfindung sind in den abhängigen Ansprüchen angegeben.

Erfindungsgemäss weist die Sensorik zumindest einen im Bereich zumindest einer der Eintrittsöffnungen angeordneten Thermistor auf. Ein Thermistor ist ein passives Bauelement mit einem temperaturabhängigen ohmschen Widerstandswert. Er ist vorzugsweise ein NTC (für Negative Temperature Coefficient Thermistor) oder ein PTC (für Positive Temperature Coefficient Thermistor), d.h. ein Thermistor mit negativem oder positivem Temperaturkoeffizienten. Die Steuereinheit ist mit dem zumindest einen Thermistor zur (ausschliesslichen) Erfassung eines jeweiligen Temperaturmesssignals verbunden. Ein Thermistor ist somit ein spezieller Temperatursensor.

Weiter gemäss der Erfindung ist die Steuereinheit dazu eingerichtet, eine Warnmeldung auszugeben, falls die Signalbandbreite von Signalfluktuationen zumindest eines der erfassten, vorzugsweise aller Temperaturmesssignale, eine Mindestzeit lang einen Wert von 30 mK, insbesondere von 20 mK, vorzugsweise von 15 mK, unterschreitet. Dabei verlaufen zumindest 90% der erfassten Signalfluktuationen, vorzugsweise zumindest 95% der erfassten Signalfluktuationen, innerhalb dieser Signalbrandbreite.

Mit anderen Worten ist die Steuereinheit dazu eingerichtet, eine Warnmeldung auszugeben, falls der Signalwechselanteil (AC-Anteil), d.h. der vom Gleichanteil (DC-Anteil) entkoppelte Signalanteil, zumindest eines der erfassten, vorzugsweise aller Temperaturmesssignale, eine Mindestzeit lang einen Wert von weniger als 30 mK, insbesondere von weniger als 20 mK, vorzugsweise von weniger 15 mK, aufweist.

Die Mindestzeit liegt in einem Bereich von 1 Tag bis 1 Jahr, insbesondere in einem Bereich von 1 Tag bis 1 Monat, und vorzugsweise in einem Bereich von 1 Tag bis 1 Woche.

Zur Detektion des Ablaufs der Mindestzeit kann der Brandmelder einen Timer aufweisen. Der Timer kann ein elektronischer Zählerbaustein sein. Dieser kann bereits in der Steuereinheit integriert sein. Der Timer kann alternativ auch als Software realisiert sein, welche auf einer prozessorgestützten Steuereinheit, insbesondere auf einem Mikrocontroller, ausgeführt wird. Die Steuereinheit ist dabei eingerichtet, den Zählerstand des Timers zunächst auf einen der Mindestzeit entsprechenden Zählerstartwert zu setzen, den der Timer fortlaufenden herunterzählt. Die Steuereinheit gibt dann die Warnmeldung aus, wenn der Timer den Zählerwert Null erreicht. Werden mittels der Steuereinheit zuvor Signalfluktuationen detektiert, wird der Timer wieder auf den Zählerstartwert gesetzt.

Die Warnmeldung wird für das Ausbleiben von bewegter Umgebungsluft um den zumindest einen Thermistor herum ausgegeben. Die Signalfluktuationen rühren dabei von thermischen Fluktuationen in der Raumluft her, die den jeweiligen Thermistor unmittelbar umgibt bzw. umspült. Das Ausbleiben von bewegter Umgebungsluft ist dabei ein Indiz für das Vorliegen von Verschmutzungen im Bereich der Eintrittsöffnungen oder ein Indiz für ein erfolgtes unzulässiges Abdecken der Eintrittsöffnungen mit einer Schutzhaube oder mit einem Klebeband. In diesem Fall ist der Brandmelder nicht mehr einsatzfähig. Die Warnmeldung ist somit eine Meldung zur Nichteinsatzfähigkeit des Brandmelders.

Der Kern der Erfindung liegt in der Verwendung von rein passiv betriebenen, d.h. unbeheizten Thermistoren zur messtechnischen Erfassung sehr kleiner Signalschwankungen im jeweiligen Temperaturmesssignal aufgrund von nahezu immer vorhandenen thermischen Fluktuationen in der Umgebung des Brandmelders. Können solche thermischen Fluktuationen im Bereich der Eintrittsöffnungen detektiert werden, so ist dies ein (sicheres) Indiz dafür, dass die Eintrittsöffnungen ausreichend durchlässig für eine Branddetektion sind. Zumindest sind die Eintrittsöffnungen bei Vorliegen von Fluktuationen dann nicht vollständig verschmutzt oder verstopft, oder sind absichtlich abgedeckt oder abgeklebt worden. Letzteres ist häufig dann der Fall, wenn aufgrund von Malerarbeiten der Brandmelder durch eine Schutzhaube absichtlich abgedeckt wird, um ein versehentliches Bemalen des Brandmelders zu vermeiden. Häufig werden die Eintrittsöffnungen auch mittels eines Kreppbands abgeklebt oder mittels eines Gummihandschuhs abgedeckt, falls eine solche Schutzhaube nicht vorhanden sein sollte.

So hat sich in messtechnischen Untersuchungen gezeigt, dass thermische Fluktuationen, d.h. Strömungsfluktuationen, hinsichtlich ihrer Temperaturverteilung nicht vollständig homogen sind. Es konnte auch festgestellt werden, dass die (mittlere) Signalbrandbreite von Signalfluktuationen, die einem Rauschsignal ähneln, im jeweiligen Temperaturmesssignal typischerweise im Bereich um 15 mK bereits um ein Vielfaches grösser ist als das reine thermische Rauschen des Thermistors selbst. Die Detektion der sehr kleinen Temperaturänderungen rührt dabei von minimalen Wärmeeinträgen in die Thermistoren bzw. von minimalen Wärmeabfuhren aus den Thermistoren her. Da der jeweilige Thermistor nicht beheizt wird, gibt es auch keinen Kühleffekt, den eine thermische Fluktuation bzw. eine Strömungsfluktuation bei einem sonst beheizten Strömungssensor bewirken würde. Die Höhe des Kühleffektes wäre dann ein Mass für die Geschwindigkeit der den Strömungssensor umfliessenden Strömung.

Derartige thermische Fluktuationen in der Umgebung des Brandmelders stammen typischerweise vom Öffnen und Schliessen von Türen, von einem Windstoss, welcher von ausserhalb des Gebäudes auf nicht vollständig dichte Fenster trifft, von Luftverwirbelungen durch Personen oder von sich ein- und ausschaltenden Heizungen, Klimaanlagen, Lüftern oder Gebläsen.

Wie zuvor beschrieben, wird die Ausgabe der Warnmeldung sozusagen für eine dem vorgegebenen Vergleichswert entsprechende Zeitdauer unterdrückt. Es kann dann von einem nicht unzulässig hoch verschmutzten Brandmelder ausgegangen werden, wenn ab und zu ein Luftschwall mit einer im Vergleich zur Temperatur des jeweiligen Thermistors geringfügig unterschiedlichen Lufttemperatur innerhalb dieser Zeitdauer detektiert wird.

Der besondere Vorteil der Erfindung liegt darin, dass kein elektrisches, strom- bzw. leistungsintensives Aufheizen des jeweiligen Thermistors erforderlich ist. Dadurch kann der Brandmelder in vorteilhafter Weise auch ein (ausschliesslich) batteriegestützter Brandmelder sein. Dessen Batterie kann zur alleinigen Stromversorgung des Brandmelders vorgesehen sein.

Ein weiterer Vorteil ist darin zu sehen, dass die verwendeten Thermistoren, insbesondere die NTCs, als Massenprodukt im Vergleich zu dedizierten Strömungssensoren erheblich günstiger und zudem erheblich kompakter sind.

Schliesslich ist es ein weiterer Vorteil, dass diese Bauelemente bei einem Brandmelder mit einer Übertemperaturerfassung als weitere Brandkenngrösse mitverwendet werden können. Dadurch benötigt ein erfindungsgemässer Brandmelder vorteilhaft weniger Bauelemente im Vergleich zu Brandmeldern mit einem Hitzedrahtströmungssensor als Strömungssensor.

Dagegen wird bei thermischen Anemometern, wie z.B. bei einem Hitzedrahtanemometer, ein Sensorelement verwendet, das elektrisch beheizt werden muss und dessen elektrischer Widerstand von der Temperatur bzw. vom Kühleffekt abhängt. Durch die Umströmung findet ein Wärmetransport in das Strömungsmedium statt, der sich mit der Strömungsgeschwindigkeit verändert. Durch Messung der elektrischen Grössen kann dann so auf die Strömungsgeschwindigkeit geschlossen werden. Für den Betrieb derartiger Sensoren ist jedoch unabhängig vom nachteilig hohen Strom- und Energiebedarf zusätzlich nachteilig eine spezielle Elektronik notwendig, die den Heizstrom regelt und das Sensorsignal verstärkt.

Ist der erfindungsgemässe Brandmelder ein optischer Rauchmelder, insbesondere ein Streulichtrauchmelder, so ist eine (charakteristische) Brandkenngrösse die Rauchdichte, die messtechnisch mit einem Streulichtpegel korreliert. Die Rauchdichte wird auf ein Überschreiten einer Mindestrauchdichte hin überwacht, also messtechnisch eines Mindeststreulichtpegels. Alternativ oder zusätzlich kann die Rauchdichte bzw. der korrespondierende Streulichtpegel auch auf eine unzulässig schnelle Erhöhung hin überwacht werden.

Ist der erfindungsgemässe Brandmelder ein thermischer Melder, so ist eine (charakteristische) Brandkenngrösse die Temperatur in der unmittelbaren Umgebung um den Brandmelder, die auf ein Überschreiten einer Mindesttemperatur hin überwacht wird. Alternativ oder zusätzlich kann die Temperatur auch auf eine unzulässig schnelle Erhöhung hin überwacht werden. In diesem Fall ist die Steuereinheit des Brandmelders dazu eingerichtet, das jeweilige Temperaturmesssignal auf das Überschreiten eines Übertemperaturgrenzwertes von insbesondere 54°C und/oder auf das Überschreiten einer Temperaturanstiegsrate von insbesondere 5°C pro Minute, vorzugsweise von 10°C pro Minute, als Brandkenngrössen hin zu überwachen und im detektierten Brandfall einen Brandalarm auszugeben.

Der Brandmelder kann auch eine Kombination aus einem optischen Rauchmelder, insbesondere aus einem Streulichtrauchmelder, und aus einem thermischen Melder sein. Im einfachsten Fall erfolgt ein Brandalarm, sobald eine der erfassten Brandkenngrössen einen zugeordneten Vergleichswert überschreitet.

Die Steuereinheit des Brandmelders ist insbesondere prozessorgesteuert und vorzugsweise ein Mikrocontroller. Auf einem solchen Mikrocontroller wird durch dessen Prozessoreinheit ein Softwareprogramm ausgeführt, welches die erfasste zumindest eine Brandkenngrösse analysiert, bewertet und bei einem detektierten Brand einen Brandalarm ausgibt, und welches die Warnmeldung im Falle des Ausbleibens von thermischen Fluktuationen für die vorgegebene Mindestzeit lang ausgibt.

Der Brandmelder ist vorzugsweise als Punktmelder ausgebildet. Er kann an einer Melderleitung einer Brandmeldezentrale mit typischerweise mehreren weiteren Brandmeldern angeschlossen sein. Alternativ kann der Brandmelder batteriebetrieben sein.

Nach einer Ausführungsform ist die Steuereinheit dazu eingerichtet, das jeweilige Temperaturmesssignal mittels eines A/D-Umsetzers mit einer vorgegebenen Abtastperiode AP fortlaufend in ein jeweiliges digitales Temperaturmesssignal umzusetzen, insbesondere mit einer Abtastperiode AP in einem Bereich von 0.1 bis 10 Sekunden, vorzugsweise in einem Bereich von 0.5 bis 2 Sekunden. Dadurch ist das typischerweise kurzzeitige, sporadische Auftreten von bewegter Luft mit thermischen Inhomogenitäten zuverlässig detektierbar. Die eigentliche A/D-Umsetzzeit mittels eines A/D-Umsetzer in einem Mikrocontroller beträgt üblicherweise weniger als 10 Mikrosekunden, insbesondere weniger als 2 Mikrosekunden.

Nach einer weiteren Ausführungsform ist die Steuereinheit dazu eingerichtet, das jeweilige erfasste Temperaturmesssignal zunächst mittels eines Hochpassfilters zu filtern und nachfolgend die Signalfluktuationen im jeweiligen Temperaturmesssignal zu detektieren. Die Eckfrequenz, d.h. die Filterfrequenz, des Hochpassfilters ist insbesondere kleiner als 0.1 Hz. Dadurch wird der Gleichsignalteil im jeweiligen Temperaturmesssignal zur verbesserten messtechnischen Auswertung des fluktuierenden Wechselsignalteils vorteilhaft entfernt. Das jeweilige resultierende Hochpassfiltersignal ist somit gleichteilentkoppelt bzw. DC-entkoppelt. Das Hochpassfilter kann ein mit diskreten Bauelementen realisiertes RC-Glied sein, welches ausgangsseitig dem jeweiligen Thermistor nachgeschaltet bzw. einem ausgangsseitig dem Thermistor nachgeschalteten Signalverstärker nachgeschaltet ist. Die zuvor genannten diskreten Bauelemente können auch bereits in der Steuereinheit integriert sein. Alternativ ist das Hochpassfilter ein digitales Hochpassfilter.

Nach einer zur vorherigen Ausführungsform alternativen Ausführungsform ist die Steuereinheit dazu eingerichtet, das jeweilige erfasste Temperaturmesssignal zunächst mittels eines Hochpassfilters zu filtern, ein vom jeweiligen Hochpassfilter ausgegebenes Hochpassfiltersignal mittels eines Tiefpassfilters mit einer Filterzeit im Bereich von 1 bis 120 Minuten, vorzugsweise von 15 bis 60 Minuten, zu filtern und als ein jeweiliges Filterausgangssignal auszugeben. Die Eckfrequenz, d.h. die Filterfrequenz, des Hochpassfilters ist insbesondere kleiner als 1 Hz, vorzugsweise kleiner als 0.1 Hz. Die Steuereinheit ist dazu eingerichtet, die Warnmeldung auszugeben, falls zumindest eines, vorzugsweise alle Filterausgangssignale, eine Mindestzeit lang einen vorgegebenen Grenzwert von 5 mK, insbesondere von 3 mK, vorzugsweise von 1.5 mK, anstelle der Signalbandbreite der Signalfluktuationen im jeweiligen Temperaturmesssignal, unterschreitet. Dadurch ist eine exaktere Auswertung der Temperaturmesssignale auf das Vorliegen von Signalfluktuationen hin möglich.

Nach einer zu beiden vorherigen Ausführungsformen alternativen Ausführungsform ist die Steuereinheit dazu eingerichtet, das jeweilige erfasste Temperaturmesssignal zunächst mittels eines Hochpassfilters zu filtern, ein vom jeweiligen Hochpassfilter ausgegebenes Hochpassfiltersignal mittels eines gleitenden Mittelwertfilters, insbesondere mittels eines gleitenden quadratischen oder arithmetischen Mittelwertfilters, mit einer vorgegebenen Filterzeit im Bereich von 1 bis 120 Minuten, vorzugsweise von 15 bis 60 Minuten, zu filtern und als ein jeweiliges Filterausgangssignal auszugeben. Die Eckfrequenz, d.h. die Filterfrequenz, des Hochpassfilters ist insbesondere kleiner als 1 Hz, vorzugsweise kleiner als 0.1 Hz. In der englischen Fachsprache wird ein solches Filter auch als Moving Average Filter bezeichnet. Eine andere Bezeichnung für den quadratischen Mittelwertfilter ist der Effektivwertfilter, der in der englischen Fachsprache auch als RMS-Filter für Root Mean Square-Filter bezeichnet wird.

Die Steuereinheit ist dazu eingerichtet, die Warnmeldung auszugeben, falls zumindest eines, vorzugsweise alle Filterausgangssignale, eine Mindestzeit lang einen vorgegebenen Grenzwert von 5 mK, insbesondere von 3 mK, vorzugsweise von 1.5 mK, anstelle der Signalbandbreite der Signalfluktuationen im jeweiligen Temperaturmesssignal, unterschreitet. Ist der gleitende Mittelwertfilter ein gleitender quadratischer Mittelwertfilter, also ein gleitender Effektivwertfilter bzw. Moving RMS-Filter, so ist hier aufgrund der signalleistungsbezogenen messtechnischen Betrachtung eine besonders exakte Auswertung der Temperaturmesssignale auf das Vorliegen von thermischen Fluktuationen hin möglich.

Die zuvor genannten Hochpass-, Tiefpass- und gleitende Mittelwertfilter sind insbesondere digitale Filter, vorzugsweise stabile FIR-Filter (FIR für Finite Impulse Response), die als Teil eines Softwareprogramms auf einem Mikrocontroller als Steuereinheit ausgeführt werden. Das einfachste FIR-Filter ist die klassische Mittelwertbildung durch Summierung einzelner aufeinander folgender Werte und Division durch deren Anzahl. Führt man dies nicht blockweise (Zahl 1 bis Zahl 10, Zahl 11 bis Zahl 20 etc.), sondern überlappend (Zahl 1 bis Zahl 10, Zahl 2 bis Zahl 11, Zahl 3 bis Zahl 12 etc.) durch, so gelangt man zum gleitenden arithmetischen Mittelwert. Ein bevorzugtes FIR-Filter ist die Mittelwertbildung durch die Summierung der Quadrate einzelner aufeinander folgender Werte und Division durch deren Anzahl mit anschliessender Wurzelbildung. Führt man dies wiederum nicht blockweise, sondern wieder überlappend durch, so gelangt man zum gleitenden quadratischen Mittelwert (Moving RMS).

Nach einer vorteilhaften Ausführungsform ist der vorgegebene Grenzwert in einem Bereich des 1.5- bis 10-fachen, insbesondere des 1.5- bis 5-fachen, eines Referenzwertes festgelegt, der an einem neuen, neuwertigen oder überholten, insbesondere fabrikneuen Brandmelder, in einer strömungsfreien Testumgebung messtechnisch ermittelt worden ist. Die messtechnische Ermittlung erfolgt typischerweise bei einer Raumtemperatur von 20°C ± 2°C und typischerweise bei normalen Umgebungsluftdruck. Im Wesentlichen entspricht der Referenzwert dem thermischen Rauschen bzw. der thermischen Rauschleistung.

Einer weiteren Ausführungsform zufolge ist die Steuereinheit dazu eingerichtet, das jeweilige Temperaturmesssignal mittels des A/D-Umsetzers durch eine Anzahl OVS von Überabtastungen in einem Bereich von 2 bis 4096, insbesondere mit einer Anzahl OVS von 64, 256 oder 1024, fortlaufend in das jeweilige überabgetastete digitale Temperaturmesssignal umzusetzen. Dabei ist die Gesamtzeit der Überabtastungen je Umsetzung eines Temperaturmesssignals in einen gemittelten Digitalwert kleiner als 50 ms, insbesondere kleiner als 25 ms, vorzugsweise kleiner als 10 ms.

Durch eine Überabtastung erhöht sich rechnerisch die Auflösung bei einer A/D-Umsetzung. Die Anzahl von «Extra»-Bits folgt dabei der Beziehung 0.5 x ld OVS, wobei ld der duale Logarithmus und OVS die Anzahl der Überabtastungen ist. Bei einer Anzahl von 256 Überabtastungen erhöht sich die Auflösung für jeden umgesetzten Digitalwert somit um 4 Bit.

Der besondere Vorteil dabei ist, dass anstelle eines teuren Mikrocontrollers mit einem 14 Bit-A/D-Umsetzer oder einem 16 Bit-A/D-Umsetzer nun ein kostengünstiger Mikrocontroller mit einem 10 Bit-A/D-Umsetzer oder mit einem 12 Bit-A/D-Umsetzer eingesetzt werden kann. Zudem kann eine zusätzliche Signalverstärkerschaltung entfallen. Durch die Erhöhung der Auflösung für jeden umgesetzten Digitalwert um die beispielhaften 4 Bit sind auch kleinste Temperaturschwankungen im jeweiligen Temperaturmesssignal zuverlässig aus dem thermischen Rauschen des Thermistors heraus auflösbar.

Nach einer weiteren Ausführungsform ist die Steuereinheit dazu eingerichtet, den jeweiligen Thermistor derart anzusteuern, dass sich dieser pro Messwerterfassung um weniger als 0.5 mK, insbesondere um weniger als 0.1 mK, erwärmt. Dadurch wird der jeweilige Thermistor faktisch passiv mit vernachlässigbarer Temperaturerhöhung betrieben.

Alternativ oder zusätzlich ist die Steuereinheit dazu eingerichtet, den jeweiligen Thermistor derart anzusteuern, dass dieser eine maximale elektrische Energie von 10 µJ, insbesondere von 5 µJ, vorzugsweise von 0.5 µJ, pro Messwerterfassung aufnimmt. Auch in diesem Fall wird der jeweilige Thermistor faktisch mit vernachlässigbarer Temperaturerhöhung betrieben.

Einer weiteren Ausführungsform zufolge ist die Wärmekapazität des jeweiligen Thermistors derart bemessen, dass eine thermische Ansprechzeit des jeweiligen Thermistors maximal 3 s, insbesondere von 2 s, vorzugsweise maximal 1 s, beträgt. Mit der «thermischen Ansprechzeit» ist die Zeitspanne gemeint, in welcher der Thermistor bei äusserem Anlegen einer sprungartigen Temperaturdifferenz die Hälfte dieser Temperaturdifferenz detektiert. Dadurch sind bereits geringste Temperaturschwankungen und somit thermische Inhomogenitäten innerhalb der bewegten Luft, die in den Bereich einer Eintrittsöffnung oder in das zentrale Innere der Messkammer gelangt, detektierbar.

Einer weiteren Ausführungsform zufolge ist im Gehäuse eine über die zumindest eine Eintrittsöffnung mit der Umgebungsluft kommunizierende Branddetektionseinheit, insbesondere eine optische Messkammer, zur Erfassung der zumindest einen Brandkenngrösse aufgenommen oder ausgebildet. Es ist im Bereich der jeweiligen Eintrittsöffnung und der Branddetektionseinheit ein Gitter, insbesondere ein Insektenschutzgitter, angeordnet.

Bei einer ersten Ausgestaltung ist das Gitter zwischen dem zumindest einen Thermistor und der Branddetektionseinheit im Bereich der jeweiligen Eintrittsöffnung angeordnet. Insbesondere ist der zumindest eine Thermistor in Bezug zur Hauptachse des Brandmelders radial aussenliegend zum Gitter angeordnet. Der jeweilige Thermistor befindet sich von aussen betrachtet «vor» dem Gitter. Vorzugsweise sind zumindest zwei Thermistoren gleichmässig in Umfangsrichtung zur Hauptachse des Brandmelders verteilt angeordnet. Dadurch ist vorteilhaft eine besonders zuverlässige Überwachung auf eine unzulässige Abdeckung der zumindest einen Eintrittsöffnung möglich.

In einer zweiten Ausgestaltung ist der zumindest eine Thermistor zwischen dem Gitter und der Branddetektionseinheit im Bereich der jeweiligen Eintrittsöffnung angeordnet. Im Vergleich zur vorherigen Ausgestaltung ist der zumindest eine Thermistor in Bezug zur Hauptachse des Brandmelders radial innenliegend zum Gitter angeordnet. Der jeweilige Thermistors befindet sich von aussen betrachtet «hinter» dem Gitter. Weiter vorzugsweise sind die zumindest zwei Thermistoren gleichmässig in Umfangsrichtung zur Hauptachse des Brandmelders verteilt angeordnet. Im Falle von einer geraden Anzahl von Thermistoren sind diese in Bezug zur Hauptachse radial gegenüberliegend angeordnet. Dadurch ist vorteilhaft eine Überwachung des zur jeweiligen Eintrittsöffnung zugeordneten Gitterabschnitts auf eine zunehmende und schliesslich unzulässig hohe Verschmutzung hin möglich. Darüber hinaus ist auch eine Überwachung auf eine unzulässige Abdeckung der zumindest einen Eintrittsöffnung möglich.

Einer weiteren Ausführungsform zufolge ist die Steuereinheit dazu eingerichtet, einen Betriebszeitmesser des Brandmelders mit Beginn der elektrischen Stromversorgung des Brandmelders zu starten. Die Steuereinheit ist eingerichtet, eine Abgedeckt-Meldung, oder die Warnmeldung zusammen mit einer Abgedeckt-Meldung, als Indiz für eine unzulässige Abdeckung der zumindest einen Eintrittsöffnung auszugeben, falls die Signalbandbreite von Signalfluktuationen in zumindest einem der erfassten, vorzugsweise in allen Temperaturmesssignalen, eine Mindestwartezeit lang in einem Bereich von 1 Stunde bis 3 Tage, vorzugsweise von 1 Stunde bis 24 Stunden, einen Wert von 30 mK, insbesondere von 20 mK, vorzugsweise von 15 mK, unterschreitet, und falls zudem ein Betriebszeitmesswert des Betriebszeitmessers kleiner ist als 2 Jahre, vorzugsweise kleiner als 1 Jahr.

Der Betriebszeitmesser kann ein Zählerbaustein mit einem nichtflüchtigen elektronischen Speicher sein, wie z.B. ein EEPROM-, Flash- oder FRAM-Speicher. Der Betriebszeitmesser kann ein separates elektronisches Bauelement oder bereits in der Steuereinheit integriert sein. Typischerweise wird ein Brandmelder mit dem Einsetzen in seinen Meldersockel über eine Melderleitung bzw. über einen Melderbus durch eine Brandmeldezentrale mit elektrischem Strom versorgt. Im Falle eines batteriebetriebenen Brandmelders erfolgt die elektrische Stromversorgung mit dem Einsetzen oder Einschalten einer Batterie des Brandmelders.

Hierbei kann angenommen werden, dass ein Brandmelder mit geringer Betriebslaufzeit kaum Verschmutzungen im Bereich der Eintrittsöffnungen derart aufweisen kann, dass ein Hineinströmen von zu detektierendem Rauch bzw. Brandgas durch die Eingangsöffnung in das Innere des Brandmelders zur Branddetektion unterbunden wird. Eine Ursache für das Ausbleiben von Fluktuationen liegt dann mit hoher Wahrscheinlichkeit daran, dass die Eintrittsöffnungen mit einer Schutzkappe abgedeckt worden sind oder mangels einer solchen mit einem Klebeband abgeklebt worden sind, um bei anstehenden Malerarbeiten eine Überstreichen der Brandmelder zu vermeiden.

Mit Vorteil wird die Abgedeckt-Meldung bzw. die Warnmeldung mit der Abgedeckt-Meldung nach dem Wiedereinsetzen eines Brandmelders in seinen Meldersockel oder beim Wiedereinschalten einer Brandmeldeanlage mit einer Vielzahl von erfindungsgemässen Brandmeldern ausgeben, um auf die mögliche Nichtbetriebsbereitschaft eines Brandmelders hinzuweisen.

Nach einer Ausführungsform ist die Steuereinheit dazu eingerichtet, die Warnmeldung und/oder die Abgedeckt-Meldung optisch und/oder akustisch direkt am Brandmelder auszugeben, wie z.B. mittels einer blinkenden LED oder mittels eines Buzzers. Alternativ oder zusätzlich kann Warnmeldung und/oder die Abgedeckt-Meldung an eine mit dem Brandmelder verbundene übergeordnete Zentrale und/oder drahtlos über eine Funkverbindung an eine übergeordnete Zentrale ausgegeben werden.

Die Aufgabe der Erfindung wird weiterhin durch ein Verfahren zur Detektion von Verschmutzungen oder einer unzulässigen Abdeckung zumindest einer Eintrittsöffnung für Rauch oder Brandgas bei einem Brandmelder gelöst. Dabei ist zumindest ein (unbeheizter) Thermistor im Bereich einer der Eintrittsöffnungen angeordnet. Es wird ein Temperaturmesssignal vom jeweiligen Thermistor erfasst. Es wird ein Timer gestartet, wenn in zumindest einem der Temperaturmesssignale thermische Fluktuationen mit einer Signalbandbreite von mindestens 30 mK, insbesondere von mindestens 20 mK, vorzugsweise von mindestens 15 mK, detektiert werden. Es wird schliesslich eine Warnmeldung bei einem Ausbleiben von bewegter Umgebungsluft um den jeweiligen Thermistor herum ausgegeben, wenn die (mittlere) Signalbandbreite von Signalfluktuationen in zumindest einem der erfassten, vorzugsweise in allen Temperaturmesssignalen, eine Mindestzeit lang einen Wert von 30 mK, insbesondere von 20 mK, vorzugsweise von 15 mK, unterschreitet. Dabei verlaufen zumindest 90% der erfassten Signalfluktuationen, vorzugsweise zumindest 95% der erfassten Signalfluktuationen, innerhalb dieser Signalbrandbreite.

Die Mindestzeit liegt in einem Bereich von 1 Tag bis 1 Jahr, insbesondere in einem Bereich von 1 Tag bis 1 Monat, und vorzugsweise in einem Bereich von 1 Tag bis 1 Woche.

Für die weitere Beschreibung gilt zur Vermeidung unnötiger Wiederholungen, dass Merkmale und Details, die im Zusammenhang mit dem genannten Brandmelder sowie mit dessen Ausführungsformen beschrieben sind, selbstverständlich auch im Zusammenhang mit und im Hinblick auf das korrespondierende Verfahren gelten und umgekehrt, so dass bezüglich der Offenbarung zu den einzelnen Aspekten der Erfindung stets wechselseitig Bezug genommen wird bzw. werden kann.

Die für den erfindungsgemässen Brandmelder, insbesondere Streulichtrauchmelder, beschriebenen Merkmale und Details, wie z.B. Ausführungsformen von Thermistoren, Zahlenwerte, Temperaturwerte, Zeitdauern, Änderungsraten etc., gelten ebenso für das korrespondierende Verfahren.

Die Erfindung sowie vorteilhafte Ausführungen der vorliegenden Erfindung werden am Beispiel der nachfolgenden Figuren erläutert. Dabei zeigen:
- FIG 1: ein Beispiel für einen erfindungsgemässen Brandmel- der mit vier im Bereich der Eintrittsöffnung verteilt angeordneten Thermistoren,
- FIG 2: eine Draufsicht auf den Brandmelder gemäss der in FIG 1 eingetragenen Blickrichtung II,
- FIG 3: ein Blockschaltbild einer elektronischen Steuereinheit des erfindungsgemässen Brandmelders,
- FIG 4: den Verlauf eines ungefilterten Temperaturmesssignals eines Thermistors, angeordnet im Bereich einer Eintrittsöffnung eines erfindungsgemässen Brandmelders,
- FIG 5: den Verlauf des Betrags eines Hochpassfiltersignals nach Filterung des ungefilterten Temperaturmesssignals aus FIG 4 in vergrösserter Ansicht, und
- FIG 6: den Verlauf des Betrags eines Filterausgangssignals nach Filterung des Hochpassfiltersignals aus FIG 5 mittels eines Tiefpasses in stark vergrösserter Ansicht.

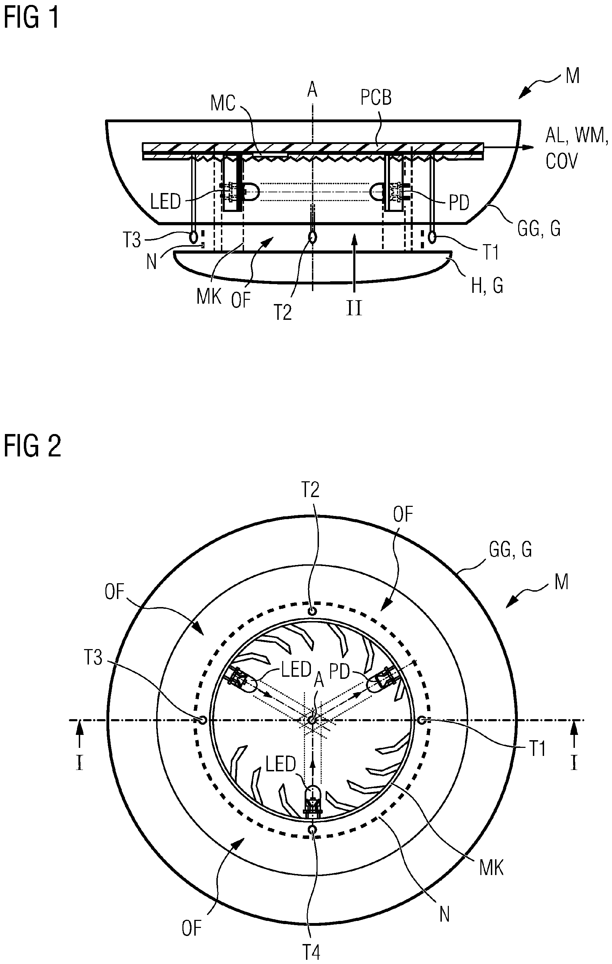

FIG 1 zeigt ein Beispiel für einen erfindungsgemässen Brandmelder M mit vier im Bereich der Eintrittsöffnung OF verteilt angeordneten Thermistoren T1-T4. Mit G ist ein Gehäuse des Brandmelders M bezeichnet, welches einen Grundkörper GG und eine Haube H umfasst. Dazwischenliegend weist der Brandmelder M beispielhaft eine um eine Hauptachse A des Brandmelders M komplett umlaufende Eintrittsöffnung OF auf. Die gezeigten Thermistoren T1-T4 sind Teil einer Sensorik zur Erfassung einer Strömung im Bereich der Sensorik.

Die gezeigte Haube H wird bespielhaft durch eine im Inneren des Gehäuses G aufgenommene, über die zumindest eine Eintrittsöffnung OF mit der Umgebungsluft kommunizierende Messkammer getragen. Die hier optische Messkammer MK ist die bevorzugte Ausführungsform einer Branddetektionseinheit MK zur Erfassung der zumindest einen Brandkenngrösse und wird auch als Labyrinth bezeichnet. Es weist in charakteristischer Weise nicht weiter bezeichnete Lamellen auf. Letztere sind dazu ausgebildet, die optische Messkammer MK einerseits gegen über die Eintrittsöffnung OF eindringendes Umgebungslicht abzuschirmen und andererseits durchlässig für zu detektierenden Rauch oder für zu detektierende Brandgase zu sein.

Mit N ist ein Insektengitter bezeichnet, das ein Eindringen von Insekten und dergleichen über die Eintrittsöffnung OF in das Innere der Messkammer MK verhindert. Dabei sind die vier Thermistoren T1-T4 in Bezug zur Hauptachse A radial aussenliegend zum Gitter N angeordnet. Das Gitter N befindet sich also zwischen den Thermistoren T1-T4 und den Lamellen der optischen Messkammer MK. Wird die Eintrittsöffnung OF nun z.B. mittels einer Schutzhaube abdeckt, so sind die Thermistoren T1-T4 dann gegenüber der umgebenden Raumluft in strömungstechnischer Hinsicht abgeschirmt.

Im vorliegenden Beispiel weist die optische Messkammer MK in bekannter Weise zwei Leuchtdioden LED unterschiedlicher Farben auf, die jeweils in einer Streulichtanordnung zu einem Photosensor PD angeordnet sind. In der Messkammer MK kann zudem ein weiterer Sensor z.B. zur Detektion von giftigen Gasen, wie z.B. von Kohlenstoffmonoxid (CO), oder z.B. auch ein Feuchtigkeitssensor als Komfortsensor angeordnet sein.

Sämtliche zuvor genannten Sensoren sowie die Leuchtdiode LED können zusammen mit einer elektronischen, prozessorgestützten Steuereinheit MC des Brandmelders M auf einem Schaltungsträger PCB des Brandmelders M angeordnet sein. Die Steuereinheit MC des Brandmelders M ist vorzugsweise ein Mikrocontroller, der dazu eingerichtet bzw. programmiert, einen Alarm AL in einem detektierten Brandfall auszugeben, symbolisiert durch einen Pfeil. Im vorliegenden Fall erfolgt die Alarmierung, wenn ein zu hoher Streulichtpegel oder ein zu hoher CO-Pegel eines CO-Sensors in der Messkammer MK detektiert wurde.

Gemäss dem Beispiel der FIG 1 und FIG 2 sind die vier in Bezug zur Hauptachse A des Brandmelders M radial aussenliegenden Thermistoren T1-T4 in Umfangsrichtung gleichmässig verteilt angeordnet. Die Thermistoren T1-T4 sind vorzugsweise NTCs. Letztere sind äusserst robust, sehr klein in ihren Abmessungen und zudem kostengünstig. Solche NTCs weisen, abgesehen von den Anschlussdrähten - maximale Abmessungen in ihren drei Dimensionen im Bereich von 1 mm bis 5 mm auf. Typischerweise sind zwei der drei Dimensionen sogar kleiner als 2 mm. Diese äusserst kompakte Bauform mit ihrer geringen thermischen Kapazität gewährleistet ein schnelles thermisches Ansprechverhalten von maximal 3 s, insbesondere von maximal 2 s und vorzugsweise von maximal 1 s. Kurzzeitige geringfügige Temperaturschwankungen in der bewegten Umgebungsluft (thermische Fluktuationen) zeigen sich dann auch an den beiden elektrischen Anschlüssen des jeweiligen NTC in Form entsprechender, messtechnisch abgreifbarer ohmscher Widerstandsänderungen und somit auch in einem zugehörigen elektrischen Temperaturmesssignal. Die zuvor genannten Thermistoren T1-T4 sind somit zur Ausgabe eines jeweiligen Temperaturmesssignals eingerichtet bzw. vorgesehen.

Der NTC für die jeweiligen Thermistoren T1-T4 kann z.B. einen auf eine Umgebungstemperatur von 25°C spezifizierten ohmschen Widerstandswert von 10 kΩ, 20 kΩ, 25 kΩ, 50 kΩ oder 100 kΩ aufweisen. Der jeweilige NTC ist typischerweise in Reihe mit einem Widerstand (Bauelement) geschaltet, der einen konstanten Widerstandswert aufweist. Vorzugsweise entspricht der ohmsche Widerstandswert des Widerstands (Bauteil) dem Widerstandswert des jeweiligen NTC bei 25°C. Diese Reihenschaltung ist an eine konstante Spannungsdifferenz geschaltet, wie z.B. an eine Spannungsdifferenz von 3.0 V, gebildet typischerweise aus der Spannungsdifferenz zwischen einem Bezugspotential (Masse) und einer positiven konstanten Versorgungsspannung. Der Mittenabgriff der Reihenschaltung ist dann einem Eingang eines A/D-Umsetzers zugeführt. Letzterer ist üblicherweise bereits in einem Mikrocontroller MC integriert. Vorzugsweise ist die elektronische Steuereinheit bzw. der Mikrocontroller MC dazu eingerichtet bzw. programmiert, nur für den Zeitraum einer (anstehenden) A/D-Umsetzung diese Spannungsdifferenz aufzuschalten. Diese kann z.B. durch elektrische Ansteuerung eines in Reihe zu dieser Reihenschaltung geschalteten Schaltelements, wie z.B. eines Transistors, erfolgen. Dadurch wird der Stromverbrauch weiter minimiert.

Alternativ kann anstelle des ohmschen Widerstands (Bauteil) eine Konstantstromquelle in Reihe zum NTC bzw. allgemein zum Thermistor geschaltet werden. Alternativ oder zusätzlich kann zwischen dem Mittenabgriff der Reihenschaltung auch ein Signalverstärker geschaltet werden, dessen Ausgangssignal an den Eingang des A/D-Umsetzers geschaltet wird.

Erfindungsmeldung ist die gezeigte Steuereinheit MC dazu eingerichtet bzw. programmiert, eine Warnmeldung WM auszugeben, falls die (mittlere) Signalbandbreite von Signalfluktuationen in zumindest einem der erfassten, vorzugsweise in allen Temperaturmesssignalen S1-S4, eine Mindestzeit MZ lang einen Wert von 30 mK, insbesondere von 20 mK, vorzugsweise von 15 mK, unterschreitet. Die Mindestzeit MZ liegt insbesondere in einem Bereich von 1 Tag bis 1 Jahr, insbesondere in einem Bereich von 1 Tag bis 1 Monat, und vorzugsweise in einem Bereich von 1 Tag bis 1 Woche.

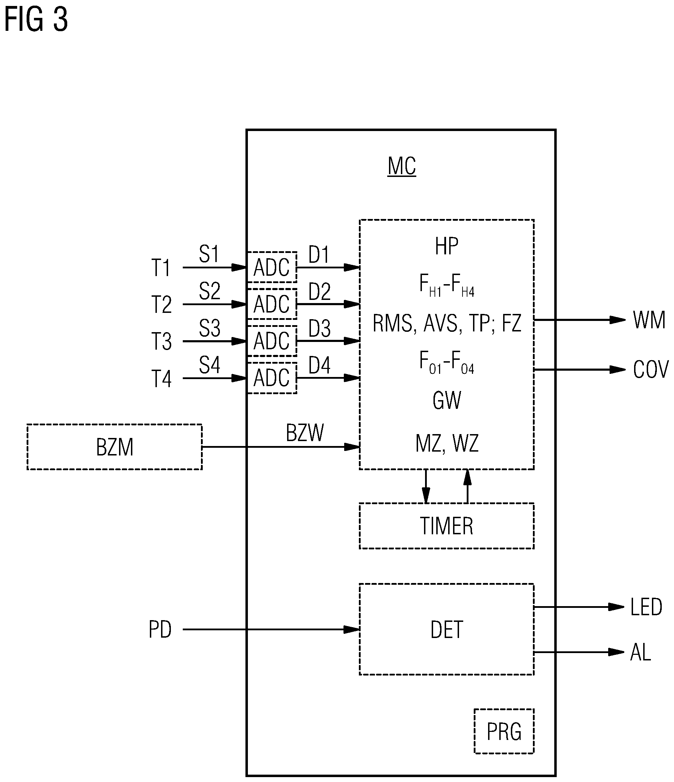

FIG 3 zeigt ein Blockschaltbild einer elektronischen Steuereinheit MC des erfindungsgemässen Brandmelders M, realisiert als Mikrocontroller. Auf dem Mikrocontroller MC wird durch dessen Prozessoreinheit ein Softwareprogramm PRG ausgeführt, um im Falle einer angeschlossenen optischen Branddetektionseinheit die zugehörige Leuchtdiode LED anzusteuern, ein Sensorsignal von der zugehörigen Photodiode PD zu empfangen und dieses mittels eines Auswerteprogramms zu analysieren und um gegebenenfalls einen Brandalarm AL auszugeben. Das Softwareprogramm PRG wird zudem ausgeführt, um gemäss der Erfindung eine Warnmeldung WM bei einem Ausbleiben von bewegter Umgebungsluft um den zumindest einen Thermistor T1-T4 herum auszugeben. Das Ausbleiben von thermischen Fluktuationen ist dabei ein Indiz auf eine unzulässig hohe Verschmutzung oder einer Blockade der zumindest einen Eintrittsöffnung.

Wie die FIG 3 zeigt, weist der Mikrocontroller MC hierzu beispielhaft vier bereits integrierte A/D-Umsetzer ADC auf, welche die von den vier Thermistoren T1-T4 stammenden Temperaturmesssignale S1-S4 in ein jeweiliges digitales Temperaturmesssignal D1-D4 umsetzen. Die vier Digitalsignale D1-D4 werden in einem nicht weiter bezeichneten Funktionsblock mittels eines jeweiligen Hochpassfilters HP in ein jeweiliges Hochpasssignal F_{H1}-F_{H4} gefiltert bzw. umgewandelt. Im vorliegenden Beispiel werden dann die vier Hochpasssignale F_{H1}-F_{H4} vorzugsweise einem jeweiligen gleitenden quadratischen Mittelwertfilter RMS zugeführt. Die ausgangsseitig bereitgestellten Filterausgangssignale F_{O1}-F_{O4} werden gemäss der Erfindung anschliessend daraufhin überwacht, ob zumindest eines der Filterausgangssignale F_{O1}-F_{O4} einen vorgegebenen Grenzwert GW überschreitet. Ist dies der Fall, wird der Zählerwert eines als Software im Mikrocontroller MC realisierter Timers TIMER auf einen der Mindestzeit entsprechenden Startzählerwert gesetzt und zum Herunterzählern gestartet. Dabei wird der Timer TIMER jedes Mal wieder zurückgesetzt bzw. neu mit dem Startzählerwert gestartet, falls zumindest eines der Filterausgangssignale F_{O1}-F_{O4} den vorgegebenen Grenzwert GW wieder überschreitet. Letztlich wird gemäss der Erfindung die Warnmeldung WM für das Ausbleiben von bewegter Umgebungsluft um den zumindest einen Thermistor T1-T4 herum auszugeben, falls der Timer TIMER den Zählerwert Null erreicht.

Alternativ können die vier Hochpasssignale F_{H1}-F_{H4} auch einem jeweiligen gleitenden arithmetischen Mittelwertfilter AVS oder einem Tiefpassfilter TP zugeführt werden. Die zuvor beschriebenen Filter HP, RMS, AVS, TP sind digitale Filter, vorzugsweise FIR-Filter. Mit FZ ist eine Filterzeit für die gleitenden Mittelwertfilter RMS, AVS bzw. für das Tiefpassfilter TP bezeichnet.

Gemäss einer Ausführungsform kann die Steuereinheit MC mit einem Betriebszeitmesser BZM verbunden sein, der mit Beginn der elektrischen Stromversorgung des Brandmelders gestartet wird. Die Steuereinheit MC ist in diesem Fall dazu eingerichtet bzw. programmiert (PRG), eine Abgedeckt-Meldung COV, oder die Warnmeldung WM zusammen mit einer Abgedeckt-Meldung COV als Indiz für eine unzulässige Abdeckung der zumindest einen Eintrittsöffnung auszugeben, falls die Signalbandbreite von Signalfluktuationen in zumindest einem der erfassten, vorzugsweise in allen Temperaturmesssignalen S1-S4, eine Mindestwartezeit WZ lang in einem Bereich von 1 Stunde bis 3 Tage, vorzugsweise von 1 Stunde bis 24 Stunden, einen Wert von 30 mK, insbesondere von 20 mK, vorzugsweise von 15 mK, unterschreitet, und falls zudem ein Betriebszeitmesswert BZW des Betriebszeitmessers BZM kleiner ist als 2 Jahre, vorzugsweise kleiner als 1 Jahr.

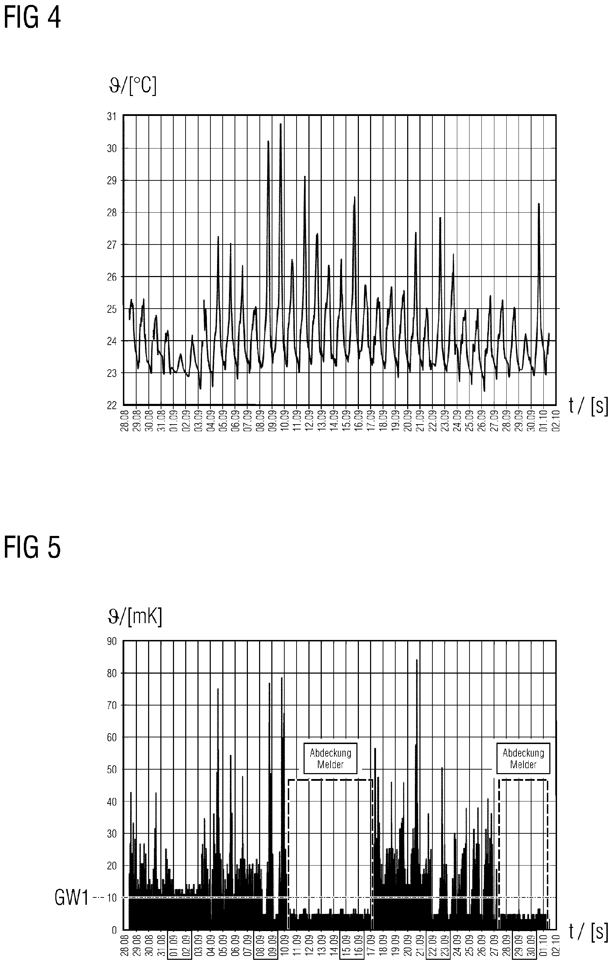

FIG 4 zeigt den Verlauf eines ungefilterten Temperaturmesssignals eines Thermistors, angeordnet im Bereich einer Eintrittsöffnung eines erfindungsgemässen Brandmelders. Das Temperaturmesssignal wurde beispielhaft mit einer Abtastzeit von 2 Sekunden abgetastet und über einen Zeitraum von etwas mehr als einem Monat (28.08. bis 02.10.) in einem nichtklimatisierten Raum der Entwicklungsabteilung der Anmelderin aufgezeichnet. Im Temperaturmesssignal spiegelt sich dabei der Verlauf der Umgebungstemperatur mit den jeweiligen Maximaltemperaturen am Tag und den jeweiligen Minimaltemperaturen in der Nacht. Die maximale Temperaturspanne betrug für diesen Zeitraum ca. 8 Grad Celsius.

FIG 5 zeigt den Verlauf des Betrags eines Hochpassfiltersignals nach Filterung des ungefilterten Temperaturmesssignals aus FIG 4 in vergrösserter Ansicht. Das eingesetzte Hochpassfilter zur Entkopplung des Gleichanteils im Temperaturmesssignal wies eine Filterzeit von 25 Sekunden auf, was einer Filterfrequenz von 1/25 Sekunden entspricht. Messtechnisch stark vergrössert zeigen sich bis zum Zeitpunkt des Aufsetzens der Schutzhaube (siehe die beiden Kästen mit der Beschriftung «Abdeckung Melder») vergleichsweise grosse Signalausschläge in Form von Signalfluktuationen mit absoluten Maximalausschlägen von ca. 80 mK, die mit thermischen Fluktuationen der Umgebungsluft eingehen. Dabei umspülen sozusagen diese thermischen Fluktuationen die direkte Umgebung um den vermessenen Thermistor.

Überraschenderweise gehen diese Signalausschläge mit dem Aufsetzen der Schutzhaube sehr schnell zurück. Ursache hierfür ist die abschirmende Wirkung der Schutzhaube. Im weiteren Verlauf zeigt der Betrag des gefiltertes Temperaturmesssignals lediglich noch Signalfluktuationen mit Ausschlägen von ca. maximal 6 mK auf, was einer Signalbandbreite mit dem doppelten Wert von ca. 12 mK entspricht, und ist damit um ca. eine Grössenordnung niedriger als im Zeitraum vor der Abdeckung der Eintrittsöffnung mit der Schutzhaube. Die Hochpassfilterung mit den gezeigten absoluten Temperaturdifferenzen führt dazu, dass das Temperaturmesssignal oberhalb der Nulllinie und auf die Nulllinie bezogen bleibt. Mit dem Bezugszeichen B/2 ist die Hälfte der Signalbandbreite der Signalfluktuationen im Zeitraum der Abdeckung des Melders bezeichnet.

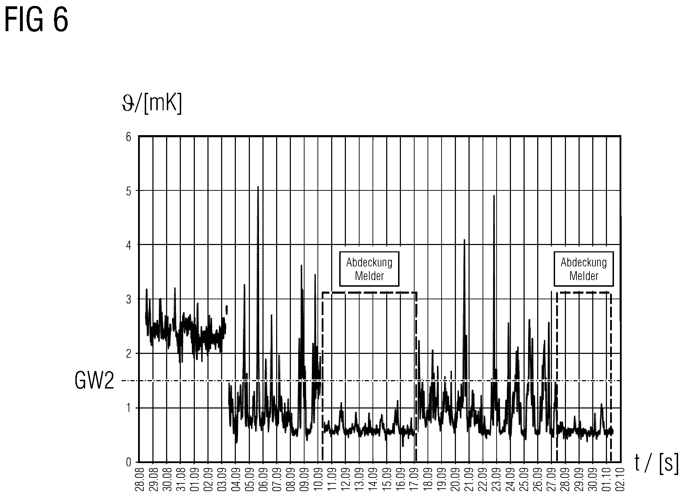

Schliesslich zeigt FIG 6 den Verlauf des Betrags eines Filterausgangssignals nach Filterung des Hochpassfiltersignals aus FIG 5 mittels eines Tiefpassfilters mit einer Filterzeit von 60 Minuten in stark vergrösserter Ansicht. Wie die FIG 6 zeigt, gehen die absoluten Werte des Tiefpasssignals von ca. 5 mK vor dem Aufsetzen der Schutzkappe drastisch auf einen Wert von etwa 1 mK nach dem Aufsetzen der Schutzkappe zurück. Mit dem Bezugszeichen GW ist ein Grenzwert mit einem beispielhaften Wert von 1.5 mK eingetragen, der von den absoluten Werten des Tiefpassfiltersignals im Zeitraum der Abdeckung des Melders sicher nicht überschritten wird. Dieser sehr grosse und stabil reproduzierbare Signalunterschied ermöglicht vorteilhaft eine zuverlässige Diskriminierung darüber, ob die Eintrittsöffnungen abgedeckt worden sind bzw. komplett verschmutzt sind.

Zusammenfassend betrifft die Erfindung einen Brandmelder, eingerichtet zur Erfassung einer Brandkenngrösse und zur Ausgabe eines Brandalarms. Er umfasst ein Gehäuse mit Eintrittsöffnungen sowie im Bereich der Eintrittsöffnungen angeordnete Thermistoren, insbesondere NTCs. Der Brandmelder umfasst eine Steuereinheit, die mit den Thermistoren zur Erfassung von Temperaturmesssignalen verbunden ist. Die Steuereinheit ist kennzeichnender Weise dazu eingerichtet, falls die (mittlere) Signalbandbreite von Signalfluktuationen in zumindest einem der erfassten, vorzugsweise in allen Temperaturmesssignalen, eine Mindestzeit lang einen Wert von 30 mK, insbesondere von 20 mK, vorzugsweise von 15 mK, unterschreitet. Ursachen für das Ausbleiben thermischer Fluktuationen können Verschmutzungen im Bereich der Eintrittsöffnungen oder ein Abdecken der Eintrittsöffnungen mit einer Schutzhaube oder mit einem Klebeband sein.

### Bezugszeichenliste

- A: Hauptachse, Symmetrieachse
- ADC: A/D-Umsetzer
- AL: Brandalarm, Alarm
- AVS: gleitendes arithmetisches Mittelwertfilter
- B/2: halbe Signalbandbreite
- BZM: Betriebszeitmesser
- BZW: Betriebszeitmesswert
- COV: Abdeckt-Meldung
- DET: Auswerteeinheit
- D1-D4: digitales Temperaturmesssignal
- F_{H1}-F_{H4}: Hochpassfiltersignal
- F_{O1}-F_{O4}: Filterausgangssignale
- FZ: Filterzeit
- GG: Grundkörper
- GW: Grenzwert
- H: Haube, Melderhaube
- HP: Hochpassfilter
- LED: Lichtsender, Leuchtdiode
- M: Brandmelder, Rauchmelder
- MC: elektronische Steuereinheit, Mikrocontroller
- MK: Branddetektionseinheit, optische Messkammer
- MZ: Mindestzeit
- N: Insektengitter, Netz
- OF: Eintrittsöffnung, Raucheintrittsöffnung
- PCB: Schaltungsträger
- PD: Lichtempfänger, Photodiode
- PRG: Computerprogramm, Software
- RMS: gleitendes quadratisches Mittelwertfilter
- S1-S4: Temperaturmesssignal
- t: Zeit, Zeitachse
- T1-T4: Thermistor, NTC
- TIMER: Timer, Zeitmessglied
- TP: Tiefpassfilter
- WM: Warnmeldung, Verschmutzungsmeldung
- WZ: Mindestwartezeit
- Δϑ: Temperaturänderung
- ϑ: Temperatur

## Patentansprüche

1. Brandmelder zur Erfassung zumindest einer Brandkenngrösse sowie zur Ausgabe eines Brandalarms (AL) in einem detektierten Brandfall, wobei der Brandmelder (M) ein Gehäuse (G) mit zumindest einer Eintrittsöffnung (OF), eine über diese mit der Umgebungsluft kommunizierende Sensorik zur Erfassung einer Strömung im Bereich der Sensorik sowie eine Steuereinheit (MC) aufweist, wobei die Steuereinheit (MC) mit der Sensorik zur Bewertung der Einsatzfähigkeit des Brandmelders (M) verbunden ist, **dadurch gekennzeichnet,**
- **dass** die Sensorik zumindest einen im Bereich zumindest einer der Eintrittsöffnungen (OF) angeordneten Thermistor (T1-T4), insbesondere zumindest einen NTC, aufweist,
- **dass** die Steuereinheit (MC) mit dem zumindest einen Thermistor (T1-T4) zur Erfassung eines jeweiligen Temperaturmesssignals (S1-S4) verbunden ist, und
- **dass** die Steuereinheit (MC) dazu eingerichtet ist, eine Warnmeldung (WM) auszugeben, falls die Signalbandbreite von Signalfluktuationen zumindest eines der erfassten, vorzugsweise aller Temperaturmesssignale (S1-S4), eine Mindestzeit (MZ) lang einen Wert von 30 mK, insbesondere von 20 mK, vorzugsweise von 15 mK, unterschreitet.

2. Brandmelder nach Anspruch 1, wobei die Mindestzeit in einem Bereich von 1 Tag bis 1 Jahr, insbesondere in einem Bereich von 1 Tag bis 1 Monat, und vorzugsweise in einem Bereich von 1 Tag bis 1 Woche, liegt.

3. Brandmelder nach Anspruch 1 oder 2, wobei die Steuereinheit (MC) dazu eingerichtet ist, das jeweilige Temperaturmesssignal (S1-S4) mittels eines A/D-Umsetzers (ADC) mit einer vorgegebenen Abtastperiode AP fortlaufend in ein jeweiliges digitales Temperaturmesssignal (D1-D4) umzusetzen, insbesondere mit einer Abtastperiode AP in einem Bereich von 0.1 bis 10 Sekunden, vorzugsweise in einem Bereich von 0.5 bis 2 Sekunden.

4. Brandmelder nach einem der Ansprüche 1 bis 3, wobei die Steuereinheit (MC) dazu eingerichtet ist, das jeweilige erfasste Temperaturmesssignal (S1-S4, D1-D4) zunächst mittels eines Hochpassfilters (HP) zu filtern und nachfolgend die Signalfluktuationen im jeweiligen Temperaturmesssignal (S1-S4, D1-D4) zu detektieren.

5. Brandmelder nach einem der Ansprüche 1 bis 3, wobei die Steuereinheit (MC) dazu eingerichtet ist, das jeweilige erfasste Temperaturmesssignal (S1-S4, D1-D4) zunächst mittels eines Hochpassfilters (HP) zu filtern, ein vom jeweiligen Hochpassfilter (HP) ausgegebenes Hochpassfiltersignal (F_{H1}-F_{H4}) mittels eines Tiefpassfilters (TP) mit einer Filterzeit (FZ) im Bereich von 1 bis 120 Minuten, vorzugsweise von 15 bis 60 Minuten, zu filtern und als ein jeweiliges Filterausgangssignal (F_{O1}-F_{O4}) auszugeben, und wobei die Steuereinheit (MC) eingerichtet ist, die Warnmeldung (WM) auszugeben, falls der Betrag zumindest eines, vorzugsweise aller Filterausgangssignale (F_{O1}-F_{O4}), eine Mindestzeit (MZ) lang einen vorgegebenen Grenzwert (GW) von 5 mK, insbesondere von 3 mK, vorzugsweise von 1.5 mK, anstelle der Signalbandbreite der Signalfluktuationen des jeweiligen Temperaturmesssignals (T1-T4) unterschreitet.

6. Brandmelder nach einem der Ansprüche 1 bis 3, wobei die Steuereinheit (MC) dazu eingerichtet ist, das jeweilige erfasste Temperaturmesssignal (S1-S4, D1-D4) zunächst mittels eines Hochpassfilters (HP) zu filtern, ein vom jeweiligen Hochpassfilter ausgegebenes Hochpassfiltersignal (F_{H1}-F_{H4}) mittels eines gleitenden Mittelwertfilters, insbesondere mittels eines gleitenden quadratischen oder arithmetischen Mittelwertfilters (RMS, AVS), mit einer vorgegebenen Filterzeit (FZ) im Bereich von 1 bis 120 Minuten, vorzugsweise von 15 bis 60 Minuten, zu filtern und als ein jeweiliges Filterausgangssignal (F_{O1}-F_{O4}) auszugeben, und wobei die Steuereinheit (MC) eingerichtet ist, die Warnmeldung (WM) auszugeben, falls der Betrag zumindest eines, vorzugsweise aller Filterausgangssignale (F_{O1}-F_{O4}), eine Mindestzeit (MZ) lang einen vorgegebenen Grenzwert (GW) von 5 mK, insbesondere von 3 mK, vorzugsweise_von 1.5 mK, anstelle der mittleren Signalbandbreite der Signalfluktuationen im jeweiligen Temperaturmesssignal (T1-T4) unterschreitet.

7. Brandmelder nach Anspruch 5 oder 6, wobei der vorgegebene Grenzwert (GW) in einem Bereich des 1.5- bis 10-fachen, insbesondere des 1.5- bis 5-fachen, eines Referenzwertes festgelegt, der an einem neuen, neuwertigen oder überholten, insbesondere fabrikneuen Brandmelder (M), in einer strömungsfreien Testumgebung messtechnisch ermittelt worden ist.

8. Brandmelder nach einem der Ansprüche 3 bis 7, wobei die Steuereinheit (MC) dazu eingerichtet ist, das jeweilige Temperaturmesssignal (S1-S4) mittels des A/D-Umsetzers (ADC) durch eine Anzahl OVS von Überabtastungen in einem Bereich von 2 bis 4096, insbesondere mit einer Anzahl OVS von 64, 256 oder 1024, fortlaufend in das jeweilige überabgetastete digitale Temperaturmesssignal (D1-D4) umzusetzen.

9. Brandmelder nach einem der vorherigen Ansprüche, wobei die Steuereinheit (MC) dazu eingerichtet ist, den jeweiligen Thermistor (T1-T4) derart anzusteuern, dass sich dieser pro Messwerterfassung um weniger als 0.5 mK, insbesondere um weniger als 0.1 mK, erwärmt, und/oder dass dieser eine maximale elektrische Energie von 10 µJ, insbesondere von 5 µJ, vorzugsweise von 0.5 µJ, pro Messwerterfassung aufnimmt.

10. Brandmelder nach einem der vorherigen Ansprüche, wobei der jeweilige Thermistor (T1-T4) eine maximale thermische Ansprechzeit von 3 s, insbesondere von 2 s, vorzugsweise von 1 s, aufweist.

11. Brandmelder nach einem der vorherigen Ansprüche,
- wobei im Gehäuse (G) eine über die zumindest eine Eintrittsöffnung (OF) mit der Umgebungsluft kommunizierende Branddetektionseinheit (MK), insbesondere eine optische Messkammer, zur Erfassung der zumindest einen Brandkenngrösse aufgenommen oder ausgebildet ist,
- wobei im Bereich der jeweiligen Eintrittsöffnung (OF) und der Branddetektionseinheit (MK) ein Gitter (N), insbesondere ein Insektenschutzgitter, angeordnet ist, und
- wobei das Gitter (N) zwischen dem zumindest einen Thermistor (T1-T4) und der Branddetektionseinheit (MK) im Bereich der jeweiligen Eintrittsöffnung (OF) angeordnet ist, oder
- wobei der zumindest eine Thermistor (T1-T4) zwischen dem Gitter (N) und der Branddetektionseinheit (MK) im Bereich der jeweiligen Eintrittsöffnung (OF) angeordnet ist.

12. Brandmelder nach einem der vorherigen Ansprüche, wobei die Steuereinheit (MC) eingerichtet ist, einen Betriebszeitmesser (BZM) des Brandmelders (M) mit Beginn der elektrischen Stromversorgung des Brandmelders (M) zu starten, wobei die Steuereinheit (MC) eingerichtet ist, eine Abgedeckt-Meldung (COV), oder die Warnmeldung (WM) zusammen mit einer Abgedeckt-Meldung (COV), als Indiz für eine unzulässige Abdeckung der zumindest einen Eintrittsöffnung (OF) auszugeben, falls die Signalbandbreite von Signalfluktuationen zumindest eines der erfassten, vorzugsweise aller Temperaturmesssignale (S1-S4), eine Mindestwartezeit (WZ) lang in einem Bereich von 1 Stunde bis 3 Tage, vorzugsweise von 1 Stunde bis 24 Stunden, einen Wert von 30 mK, insbesondere von 20 mK, vorzugsweise von 15 mK, unterschreitet, und falls zudem ein Betriebszeitmesswert (BZW) des Betriebszeitmessers (BZM) kleiner ist als 2 Jahre, vorzugsweise kleiner als 1 Jahr.

13. Brandmelder nach einem der vorherigen Ansprüche, wobei die Steuereinheit (MC) dazu eingerichtet ist, die Warnmeldung (WM) und/oder die Abgedeckt-Meldung (COV) optisch und/oder akustisch direkt am Brandmelder (M) auszugeben und/oder an eine mit dem Brandmelder (M) verbundene übergeordnete Zentrale und/oder drahtlos über eine Funkverbindung an eine übergeordnete Zentrale ausgegeben auszugeben.

14. Brandmelder nach einem der vorherigen Ansprüche, wobei die Steuereinheit (MC) dazu eingerichtet ist, das jeweilige Temperaturmesssignal (S1-S4, D1-D4) auf das Überschreiten eines Übertemperaturgrenzwertes von insbesondere 54°C und/ oder einer Temperaturanstiegsrate von insbesondere 5°C pro Minute, vorzugsweise von 10°C pro Minute, als Brandkenngrössen hin zu überwachen und im detektierten Brandfall einen Brandalarm (AL) auszugeben.

15. Verfahren zur Detektion von Verschmutzungen oder einer unzulässigen Abdeckung zumindest einer Eintrittsöffnung (OF) für Rauch oder Brandgas bei einem Brandmelder (M),
- wobei zumindest ein unbeheizter Thermistor (T1-T4) im Bereich einer der Eintrittsöffnungen (OF) angeordnet ist,
- wobei ein Temperaturmesssignal (S1-S4) vom jeweiligen Thermistor (T1-T4) erfasst wird, und
- wobei eine Warnmeldung (WM) für das Ausbleiben von bewegter Umgebungsluft um den zumindest einen Thermistor (T1-T4) herum ausgegeben wird, wenn die Signalbandbreite von Signalfluktuationen zumindest eines der erfassten, vorzugsweise allen Temperaturmesssignale (S1-S4), eine Mindestzeit (MZ) lang einen Wert von 30 mK, insbesondere von 20 mK, vorzugsweise von 15 mK, unterschreitet.
